## Europäisches Patentamt

(19) **European Patent Office**

**Office européen des brevets**

(11) Publication number: **0 251 582**
**B1**

(12) **EUROPEAN PATENT SPECIFICATION**

(45) Date of publication of the patent specification: **27.12.90**

(21) Application number: **87305407.6**

(22) Date of filing: **18.06.87**

(51) Int. Cl.⁵: **F16C 1/22, B60K 26/04**

(54) **Control cables.**

(30) Priority: **25.06.86  GB 8615512**

(43) Date of publication of application:
**07.01.88 Bulletin 88/1**

(45) Publication of the grant of the patent:
**27.12.90 Bulletin 90/52**

(84) Designated Contracting States:
**DE ES FR GB IT NL SE**

(56) References cited:
**EP-A- 0 183 338**
**DE-B- 2 237 301**
**GB-A- 2 081 411**
**US-A- 3 662 617**

(73) Proprietor: **Gill's Cables Limited, Packington Hall Tamworth Road, Lichfield, Staffs WS14 9PP(GB)**

(72) Inventor: **Timpson, Ian Greville, The Orchards Elford Road, Comberford Tamworth Staffordshire(GB)**

(74) Representative: **Archer, Philip Bruce et al, Urquhart-Dykes & Lord, Trinity Court, Trinity Street, Priestgate, Peterborough, Cambridgeshire PE1 1DA(GB)**

ACTORUM AG

# Description

This invention relates to control cables and methods of setting control cables in an adjusted condition between a cable actuator and a device controlled thereby. An example of the application of the invention is to a fuel supply control system for a motor vehicle, for example a throttle system in which a carburettor is controlled by a driver's foot pedal through a control cable. The invention may well be applicable to other uses of control cables.

In the case of control cables used in throttle systems for motor vehicles, in many cases the standard method of throttle adjustment used in the automobile industry comprises the following steps. Firstly, the cable is fitted between the driver's foot pedal and the carburettor control linkage. Secondly, the foot pedal is depressed and held at the limit of its travel. Thirdly, the cable is adjusted until the carburettor is set at the "wide-open" setting. Finally, the foot pedal is released. This method has two major drawbacks. Firstly, the pedal has to be depressed and locked before adjusting the cable.

Secondly, proper adjustment of the system depends upon an operator making a critical adjustment on an assembly line. This often results in a maladjusted system which either cannot achieve "wide-open" throttle, or it results in overloading the system because the "wide-open" throttle position is reached before the pedal reaches its stop.

Prior art proposals in relation to control cable assemblies include systems providing for manual, semi-automatic and automatic adjustment of effective cable length. These proposals include GB-A 2 081 411 (Ford) and US-A 3 662 617 (Bennett) and EP-A 0 183 338 (Teleflex). These specifications all disclose cable assemblies in which adjustment is provided by means of ratchet systems or the like. These systems are subject to the significant shortcoming that the steps between successive adjusted positions are relatively long, corresponding to the pitch between successive ratchet teeth, and thus the adjusted position is frequently inaccurate.

GB A 1 358 012 (& DE-B 2 237 301) (General Motors) discloses a self-adjusting cable assembly providing stepless adjustment by means of the entry of a bulbous member into a resilient sleeve by forcing the sleeve over the bulbous member. While this arrangement is nominally stepless, it is subject to the significant shortcoming that the frictional forces between the sleeve and the bulbous member are somewhat unpredictable and very variable in production samples due to manufacturing tolerances. A further problem relates to the difficulty of returning the assembly to a previously adjusted position after disconnection.

An object of the present invention is to provide a selfadjusting cable assembly in which the self-adjustment is less subject to the inaccuracies arising from the ratchettype prior proposals, while avoiding the unpredictability of the previously proposed friction-based system referred to above, while allowing the adjusted working position to be clearly defined and returned-to after disassembly if necessary.

According to the invention there is provided a cable assembly as defined in the accompanying claims.

In the embodiment of the invention a control cable assembly is provided in which self-adjustment of the assembly is regulated by a collar of a resilient or flexible polymeric material, such as rubber, and a tubular sleeve member, provided at one end of the outer sheath of the cable assembly, the sleeve member being slidably received within the collar. The collar and the sleeve member are formed with surfaces for mutual sliding frictional engagement in a substantially stepless manner lengthwise of the outer cable sheath. The sliding movement is resisted by sliding friction between the members, such sliding friction being such as to prevent sliding of the adjustment member relative to the sleeve at loads up to the normal maximum for the cable assembly. In this way the uncertainties of the prior proposal requiring a bulbous member to be forced into a sheath, are overcome, while still achieving the advantages of a friction-based system.

The tubular sleeve member also has formations to receive a removable clip to lock the adjustment member in its working position. In this way, the self-adjusted position of the assembly can be manually defined by means of the clip and readily returned-to after dis-assembly, for example during maintenance.

In an embodiment described below, a control cable comprises an adjustment mechanism in which a metal or plastic tubular sleeve member is attached to the cable outer casing or sheath and may be formed with a series of annular grooves spaced apart along its length. On this sleeve member is positioned a flexible mounting or adjustment member in the form of a collar and made of rubber or suitable synthetic material of which the bore dimensions are such that a known load is required to slide the cable member through the adjustment member. This load is greater than the compressive load in the outer casing at the "wide-open" throttle setting, but is lower than the load which will over-stress the throttle system.

In the embodiment, the cable is initially fitted with the adjustment member positioned at the end of the cable member at a position corresponding to over-adjustment in the tension-increasing direction. The adjustment of the system (in the direction of decreasing cable tension) is generally in accordance with the following. Firstly, the cable is fitted between the pedal actuator and the carburretor linkage using the adjustment member secured in a suitable bracket to locate one end of the cable outer casing. Then the operator depresses the pedal to the full extent of its travel, which automatically sets the system by moving the adjustment member lengthwise of the sleeve member. A clip may then be inserted into the annular groove in the cable member which is adjacent to the back of the flexible adjustment member, so as to ensure that no movement of the adjustment member occurs in service.

In the embodiment, the correct setting is obtained because the initial position of the adjustment member ensures that the "wide-open" throttle position is achieved before the pedal reaches the full extent of its travel. At this point the load on the pedal is increased until the consequential compressive load in the cable outer casing or sheath is sufficient to slide the adjustment member over the sleeve member. The load on the pedal is maintained and the adjustment member continues to slide until the pedal reaches its stop. At this point the carburettor is still at "wide-open" throttle and the cable is now correctly adjusted. The pedal is then released. Wide-open throttle will now be achieved simultaneously with the pedal reaching its stop on future depressions of the pedal, and overloading of the system is prevented by the pedal stop itself.

Embodiments of the invention will now be described by way of example with reference to the accompanying drawings in which:

Fig.I shows a side elevation view of an end portion of the casing of a control cable assembly according to the invention including an adjustment member and an associated sleeve member;

Fig.2 shows the sleeve and the adjustment member of Fig.I connected to a support, there being also shown the internal control cable core connected between the carburretor of a motor vehicle, and a driver's foot pedal for controlling same; and

Fig.3 shows the assembly of Fig.2 ( which latter is in its pre-adjustment condition ), after the system has been adjusted by depressing the foot pedal to the limit of its downward travel.

As shown in the drawings, a system I0 for controlling the carburettor I2 of a motor vehicle by means of a driver's foot pedal I4 comprises a control cable assembly I6 assembly interconnecting the foot pedal and the carburettor and connected by an adjustment member I8 to a fixed support 20, for a purpose to be described.

Carburettor I2 is shown somewhat diagrammatically. It comprises a control lever 22 connected to the internal cable core 24 of control cable I6 and pivotted at 26.

The inner cable core 24 of cable I6 is connected at 28 to the actuating lever 30 of pedal I4, which latter is pivotted at 32 on a support 34. A pedal plate 36 is mounted on a primary actuator lever arm 38 formed integrally with arm 30 and engageable with a fixed stop 40 mounted on support 34, to limit the travel of actuator I4.

Cable I6 comprises a tubular outer casing or sheath 42 through which cable core 24 slidingly extends between the carburettor control lever 22 and actuator I4.Casing 42 is secured at the end in the region of actuator I4 to a fixed support 44 by means of an end fitting 46 fixed to the casing. At the other end of the casing, in the region of carburettor I2, there is provided adjustment means 48, which will now be described.

Adjustment means 48 comprises a casing end portion or sleeve 50 fixed to the end of the primary casing portion 42 and through which cable core 24 freely and slidingly extends. The sleeve portion 50 comprises plain end portions 52,54 separated by a central portion 56 hzving locating ribs to locate and lock a clip for a purpose to be described. On the ribbed portion there are formed a series of closely spaced annular ribs separated by respective grooves. Each rib is of rectangular cross-sectional shape and encircles the sheath and is separated from its adjacent ribs by corresponding grooves of widths similar to the ribs. These details are more readily seen in Fig.I.

Adjustment member I8 is slidingly received on sleeve portion 50. As shown in Fig.I, adjustment member I8 is generally in the form of a grommet having end flange portions 58,60 separated by a reduced diameter land 62, the whole being formed as an integral moulding of natural or synthetic rubber, or other elastomer, or from an alternative polymer such as PVC. The adjustment member has a central circular opening in which casing portion 50 is slidably received.

It is particularly to be noted that the external dimensions of sleeve portion 50 and the internal dimensions of the aperture formed in adjustment member I8 are carefully chosen so that the adjustment member has particular frictional sliding characteristics. These characteristics permit lengthwise sliding movement of the adjustment member with respect to sleeve portion 50, in accordance with the following parameters. Firstly, the thrust needed to adjust member I8 lengthwise of sleeve portion 50 is greater than that required to actuate carburettor I2. Also, it is less than that which would damage cable I6 or the mechanisms connected to it. Moreover, the load or thrust required to shift adjustment member I8 lengthwise of sleeve portion 50 is also greater than the load or thrust which occurs during kickdown on a vehicle having an automatic transmission. Kickdown relates to the technique for manually causing an automatic transmission to change to a condition for the transmission of higher torque, this being achieved by a jab applied to the throttle control system by the driver's foot. The load thus applied is usually in the range of I0 to 20% above the normal maximum load applied to the cable at full throttle. In his embodiment, where a twin carburettor is employed, a force of about 65 newtons is required to achieve the full throttle condition and it is arranged that a force of 80 to 90 newtons is needed to shift the adjustment member I8 with respect to the cable casing. The load required to actuate carburettors varies from manufacturer to manufacturer. Thus , for example, one motor vehicle manufacturer fits carburet ors requiring a force of about 80 to 90 newtons to achieve full throttle. However, the majority of carburettors require a force only of 35 to 40 newtons. Often, it is arranged that the force required for adjustment is in the range of I0 to 20 newtons above the force required to achieve wide- open throttle. For most applications relating to motor vehicle carburettors and the like a force in the range of 40 to I50 newtons will be required to effect adjustment of the adjustment member relative to the cable casing. However, a safety margin of about 20 newtons should preferably be allowed to compensate for the presence of oil or grease on the cable during use -in other words, the force required to achieve adjustment is increased by this amount.

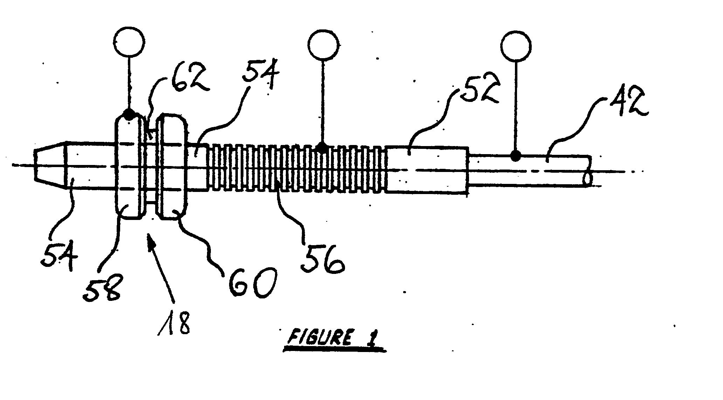

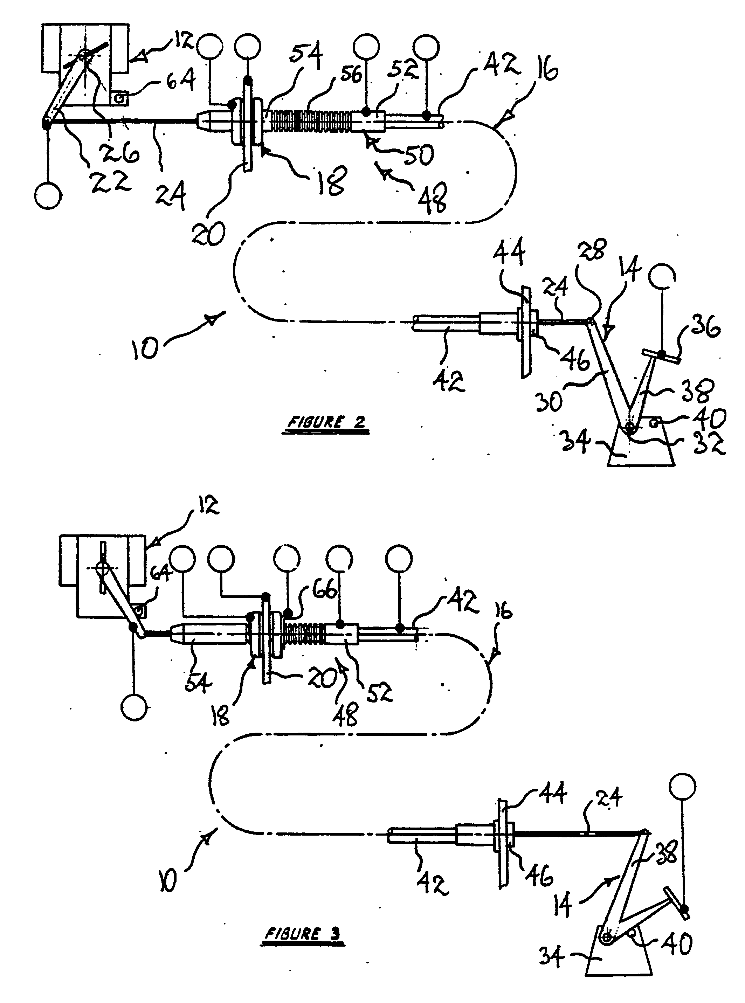

In use, the system is initially set up in the condition as shown in Fig.2 with adjustment member I8 in the over-adjusted end position corresponding to excessive tension in the cable core 24. As can be seen in Fig.2, the carburettor is in its less than fully closed position when foot pedal 14 is in its released condition.

To adjust cable 16 all that is required is for an operative to depress pedal 14 as shown in Fig.3. What happens is that the carburettor lever 22 is swung anticlockwise as seen in the drawings until it engages its end stop 64, whereupon the load in the cable 16 rises to a level at which adjustment member 18 can slide lengthwise of the cable sleeve portion 50. As shown in Fig.3 the cable casing slides through the adjustor to the position shown in Fig.3 in which the adjustment member is positioned on ribbed portion 56 of the casing. This is the correctly adjusted position in which foot pedal 14 is engaging its end stop 40, and so too is the carburettor lever 22. The latter reaches its end stop 64 before the pedal reaches stop 40. Then, the final travel of the foot pedal causes adjustment of the cable casing portion 50 through adjustment member 18, as described above. After that, a retaining clip 66 is can be inserted behind adjustment member 18 to engage between the ribs and grooves of sleve portion 56 and thereby lock the adjustment member in its properly adjusted position. It will be understood that in the normal working life of a device of this kind, adjustment of the cable with respect to the fixed support 20 in the manner described above may only occur once, though manual adjustment to take up wear may be subsequently effected by pulling the cable through adjustment member 18 and re-applying clip 66, if the latter is used. It should be noted that the rubber adjustment member 18 serves to isolate the throttle pedal 14 from engine vibration, which is a valuable second facility provided by this component.

Amongst other modifications which could be made in the above embodiment while remaining within the scope of the invention are the following. In place of the grooved cable sleve portion 50,on which the adjustment member 18 moves and is locked, it would be possible to use an alternative surface formations for that purpose. Moreover the adjustment member may be formed from suitable flexible or resilient polymeric material other than rubber. The adjustment member should preferably be of a flexible material since this tends to avoid over-adjustment. As the member moves lenghtwise of the sleeve portion, its flexibility and/or resilience tends to cause it to move backwards ( in the cable-tensioning direction ) when it comes to rest.

The adjustment member 18 can be set in its overadjusted position either before assembly or after.

## Claims

1. A control cable assembly (16) comprising:
a) an outer cable sheath (42);
b) an inner cable core (24) slidable within said sheath;
c) an adjustment member (18) to permit adjustment of the setting of the assembly for proper control of a mechanism (12) to be actuated; and
d) said adjustment member being engageable with said sheath and being steplessly position-adjustable lengthwise thereof by application of a load to the assembly to effect position-adjustment of the adjustment member relative to the sheath; characterised in that
e) said adjustment member (18) is in the form of a collar comprising a flexible or resilient polymeric material, such as rubber; and
f) a tubular sleeve member (50) is provided at one end of said cable sheath (42), said sleeve member being slidably received within said collar:
g) said sleeve member (50) comprising formations (56) to receive a removable clip (66) to lock the adjustment member (18) in its working position after automatic adjustment;
h) the dimensions of said sleeve member (50) and of the internal bore of said collar being such that the frictional sliding characteristics between the two members permits lengthwise sliding movement of the collar with respect to the sleeve at loads greater than the normal working load for the cable assembly, while preventing such sliding movement at loads up to said normal maximum for the cable assembly.

2. A control cable assembly according to claim 1 characterised in that said adjustment member (18) is in the form of a grommet.

3. A control cable assembly according to claim 1 or claim 2 characterised in that said adjustment member (18) comprises resilient polymeric material such as rubber and is adapted to resiliently deform at least slightly under said loads up to the normal maximum for the cable assembly, whereby position-adjusting the adjustment member lengthwise of the cable in the direction of decreasing cable tension is automatically followed by a slight increase in tension caused by elastic recovery of the adjustment member.

4. An automatic engine control system comprising a control cable assembly (16) as claimed in any one of the preceding claims.

## Revendications

1. Dispositif de câble de commande (16) comprenant:
(a) une gaine extérieure de câble (42) ;
(b) une âme intérieure de câble (24) qui peut coulisser dans ladite gaine;
(c) une pièce de réglage (18) pour permettre le réglage de la position du dispositif afin d'obtenir une commande correcte d'un mécanisme (12) à actionner; et
(d) ladite pièce de réglage pouvant être accouplée à ladite gaine et étant réglable en position sans discontinuité, dans le sens de sa longueur, par application d'une charge au dispositif afin d'effectuer le réglage de position de la pièce de réglage par rapport à la gaine; caractérisé en ce que:
(e) ladite pièce de réglage (18) est sous la forme d'un collier en matière de type polymère flexible ou élastique, telle que du caoutchouc;
(f) un manchon tubulaire (50) est prévu à une extrémité de ladite gaine de câble (42), ledit manchon étant reçu de façon coulissante dans ledit collier;

(g) ledit manchon (50) comporte des formations (56) de réception d'une agrafe amovible (66) afin de bloquer la pièce de réglage (18) dans sa position de travail après ajustement automatique;

(h) les dimensions dudit manchon (50) et de l'alésage intérieur dudit collier étant telles que les caractéristiques de glissement avec frottement entre les deux éléments permettent un mouvement coulissant longitudinal du collier par rapport su manchon, à des charges supérieures à la charge normale de travail du dispositif de câble, tout en empêchant un tel mouvement coulissant à des charges inférieures ou égales à ladite charge normale maximale pour le dispositif de câble.

2. Dispositif de câble de commande suivant la revendication 1, caractérisé en ce que ladite pièce de réglage (18) est sous la forme d'une pièce de traversée de cloison.

3. Dispositif de câble de commande suivant la revendication 1 ou la revendication 2, caractérisé en ce que ladite pièce de réglage (18) est en une matière de type polymère élastique, telle que du caoutchouc, et elle est prévue pour se déformer élastiquement, au moins légèrement, sous lesdites charges jusqu'à la charge normale maximale pour le dispositif de câble, de sorte que le réglage de position de la pièce de réglage dans la direction longitudinale du câble, dans le sens de diminution de la tension du câble, est automatiquement suivi d'une légère augmentation de tension engendrée par la récupération élastique de la pièce de réglage.

4. Système de commande automatique de moteur, comprenant un dispositif de câble de commande (16) suivant l'une quelconque des revendications précédentes.

**Patentansprüche**

1. Steuerkabelanordnung (16) mit:
a) einem äußeren Kabelmantel (42),
b) einer inneren Kabelseele (24), die in dem Mantel gleitfähig ist;
c) einem Justierglied (18), welches das Justieren der Einstellung der Anordnung für eine richtige Steuerung eines zu betätigenden Mechanismus (12) zuläßt; und
d) wobei das Justierglied mit dem Mantel in Eingriff bringbar und in dessen Längsrichtung stufenlos stellungs-justierbar ist durch Anlegen einer Belastung an die Anordnung, um eine Stellungs-Justierung des Justiergliedes relativ zu dem Mantel zu bewirken; dadurch gekennzeichnet, daß
e) das Justierglied (18) in der Form eines Bundringes bzw. einer Manschette vorgesehen ist, der bzw. die ein flexibles oder elastisches Polymermaterial, wie Kautschuk bzw. Gummi umfaßt; und
f) ein rohrförmiges Hülsenglied (50) an einem Ende des Kabelmantels (42) vorgesehen ist, welches in dem Bundring bzw. der Manschette gleitfähig aufgenommen ist;

g) das Hülsenglied (50) Formierungen (56) zur Aufnahme einer beweglichen Klemme bzw. Kabelschelle (66) umfaßt, um das Justierglied (18) in seiner Arbeitsstellung nach der automatischen Justage zu verriegeln;
h) die Abmessungen des Hülsengliedes (50) und der inneren Bohrung der Manschette derart vorgesehen sind, daß die Reibungsgleiteigenschaften zwischen den zwei Gliedern eine längsweise Gleitbewegung der Manschette relativ zu der Hülse bei Belastungen, die größer als die normale Arbeitslast für die Kabelanordnung ist, zulassen, während sie eine solche Gleitbewegung bei Belastungen bis zu diesem normalen Maximum für die Kabelanordnung verhindern.

2. Steuerkabelanordnung nach Anspruch 1, dadurch gekennzeichnet, daß das Justierglied (18) in Form einer Durchgangstülle bzw. Durchführungshülse vorgesehen ist.

3. Steuerkabelanordnung nach Anspruch 1 oder 2, dadurch gekennzeichnet, daß das Justierglied (18) ein elastisches Polymermaterial wie Kautschuk bzw. Gummi umfaßt und in der Lage ist, sich unter den Belastungen bis zu dem normalen Maximum für die Kabelanordnung zumindest leicht elastisch zu verformen, wodurch der Stellungs-Justierung des Justiergliedes in Längsrichtung des Kabels in der Richtung einer Verminderung der Kabelspannung eine leichte Zunahme in der Spannung automatisch folgt, die durch eine elastische Erholung des Justiergliedes verursacht wird.

4. Automatikmotor-Steuersystem mit einer Steuerkabelanordnung (16) nach einem der vorhergehenden Ansprüche.

**FIGURE 1**

FIGURE 2

FIGURE 3